# EUROPEAN PATENT SPECIFICATION

(11) **EP 1 445 760 B1**
(45) Date of publication and mention of the grant of the patent: **25.04.2007**
(21) Application number: 03251509.0
(22) Date of filing: 12.03.2003
(51) Int. Cl.: G10L 17/00, G10L 21/02, H04L 9/32, H04M 3/00, H04B 3/20

(54) **Speaker verifying apparatus**
Gerät zur Sprecherüberprüfung
Appareil de vérification du locuteur

(30) Priority: 10.02.2003 JP 2003032034
(43) Date of publication of application: 11.08.2004
(73) Proprietor: KABUSHIKI KAISHA TOSHIBA, Tokyo (JP)
(72) Inventor: Isaka, Takehiko, c/o Intellectual Property Div., Minato-ku, Tokyo 105-8001 (JP); Miseki, Kimio, c/o Intellectual Property Division, Minato-ku, Tokyo 105-8001 (JP)
(74) Representative: Brookes Batchellor LLP

(56) References cited:
- WO-A-99/27668
- US-A- 5 805 674
- US-A1- 2002 015 500
- PATENT ABSTRACTS OF JAPAN vol. 1998, no. 09, 31 July 1998 (1998-07-31) & JP 10 107790 A (SENSHU GINKOU:KK), 24 April 1998 (1998-04-24)

## Description

This invention relates to a speaker verifying apparatus which collates the speaker with the registered speaker on the basis of the voice of the speaker.

The collation of the previously registered voice signal with the newly inputted voice signal has been disclosed in Jpn. Pat. Appln. KOKAI Publication No. 2000-59501.

With this technique, however, when the voice of the authenticated speaker has been recorded in some way, there is a possibility that another person will make a misrepresentation using the recorded voice.

The technique for using a voice band signal with a special spectrum representing the present date or the like to prevent an illegal act from being done by wiretapping has been disclosed in Jpn. Pat. Appln. KOKAI Publication No. 10-107790.

With this technique, however, it is necessary to generate a complex voice band signal that includes information on the present time or the like and is scrambled so as not to be decoded illegally. Furthermore, it is necessary to carry out a complex process of determining whether the wiretapped voice signal is misused, on the basis of such a voice band signal. Consequently, an apparatus using this technique has a very complex configuration.

It is, accordingly, an object of the present invention to provide a simple configuration which makes it possible to decrease the possibility that misrepresentation will be made using a wiretapped and recorded voice.

US 5805674 and US 2002/015500 disclose speaker verifying apparatus which comprise an echo/noise cancelling part to compensate for background noise which could affect their performance.

Accordingly the present invention provides a speaker verifying apparatus characterised by comprising: a microphone; a loudspeaker arranged in such a manner that sound emitted from the loudspeaker is fed back to the microphone, a canceling part configured to cancel the component corresponding to the sound emitted from the loudspeaker and fed back to the microphone, in the output signal of the microphone; characterised by a registering part configured to register a feature quantity extracted from an output signal of the cancelling part in a registration mode; a collating part configured to collate a feature quantity representing individuality extracted from an output signal of the canceling part with the signal registered in the registering part in a verification mode; and a supplying part configured to supply an interference sound signal to the loudspeaker in the registration mode or the verification mode, and to change a signal output as the interference sound signal at intervals of a specific timing.

The invention can be more fully understood from the following detailed description when taken in conjunction with the accompanying drawings, in which:
FIG. 1 is a block diagram showing the configuration of a speaker verifying apparatus according to a first embodiment of the present invention;
FIG. 2 is a flowchart showing a process in the control section of FIG. 1;
FIG. 3 is a block diagram showing the configuration of a speaker verifying apparatus according to a second embodiment of the present invention;
FIG. 4 is a flowchart showing a process in the control section 12 of FIG. 3;
FIG. 5 is a block diagram showing the configuration of a speaker verifying apparatus according to a third embodiment of the present invention;
FIG. 6 is a flowchart showing a process in the control section 13 of FIG. 5; and
FIG. 7 is a block diagram showing the configuration of a speaker verifying apparatus according to a fourth embodiment of the present invention.

Hereinafter, referring to the accompanying drawings, embodiments of the present invention will be explained.

### (First Embodiment)

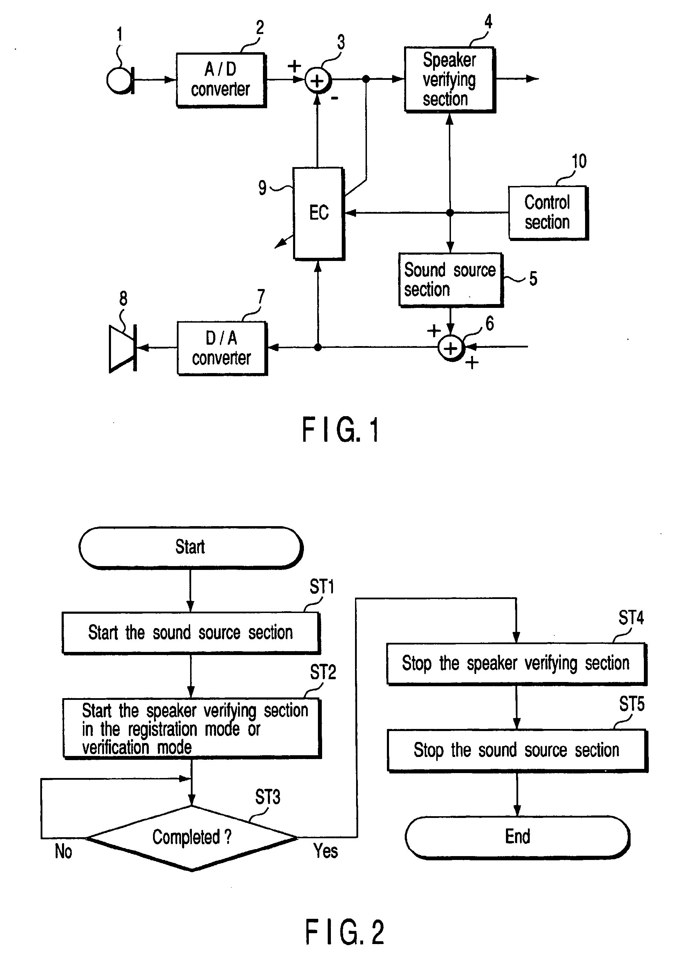

FIG. 1 is a block diagram showing the configuration of a speaker verifying apparatus according to a first embodiment of the present invention.

As shown in FIG. 1, the speaker verifying apparatus according to the first embodiment comprises a microphone 1, an A/D converter 2, a subtracter 3, a speaker verifying section 4, a sound source section 5, an adder 6, a D/A converter 7, a loudspeaker 8, an echo canceller (EC) 9, and a control section 10.

The microphone 1 outputs an audio signal corresponding to an ambient sound, such as the voice given by the speaker. The A/D converter 2 digitizes the audio signal outputted from the microphone 1. The audio signal outputted from the A/D converter 2 is inputted to the subtracter 3.

A suppressing signal outputted from the echo canceller 9 is also inputted to the subtracter 3. The subtracter 3 subtracts the suppressing signal from the audio signal outputted from the A/D converter 2.

The speaker verifying section 4 has a registration mode and a verification mode. In the registration mode, the speaker verifying section 4 extracts a feature quantity representing individuality from the audio signal outputted from the subtracter 3 and registers the quantity. In the verification mode, the speaker verifying section 4 extracts a feature quantity representing individuality from the audio signal outputted from the subtracter 3 and verifies the speaker on the basis of the extracted feature quantity and the already registered feature quantity. Detailed techniques for verifying a speaker have been described in, for example, Furui, "Digital Voice Processing," Chapter 9. Loudspeaker Recognition, Tokai University Publishing House, 1985.

The sound source section 5 outputs interference sound information. The interference sound information is inputted to the adder 6. An audio signal is also inputted to the adder 6. The audio signal arrives via, for example, a communication channel. Alternatively, the audio signal is outputted from a sound source (not shown) built in or externally provided in the speaker verifying apparatus. The adder 6 adds the inputted audio signal and the interference sound information.

The D/A converter 7 converts the audio signal outputted from the adder 6 into an analog signal. The loudspeaker 8 emits sound according to the audio signal outputted from the D/A converter 7. The loudspeaker 8 is arranged in such a manner the emitted sound is fed back to the microphone 1.

The echo canceller 9 learns the characteristic of the acoustic coupling of the loudspeaker 8 with the microphone 1 on the basis of the audio signal outputted from the subtracter 3 and the audio signal outputted from the adder 6. The echo canceller 9 convolutes coefficients determined on the basis of the acoustic coupling characteristic into the audio signal outputted from the adder 6, thereby producing the suppressing signal.

The control section 10, which includes, for example, a computer, controls the operations of the speaker verifying section 4, sound source section 5, and echo canceller 9.

Next, the operation of the speaker verifying section configured as described above will be explained.

FIG. 2 is a flowchart for the processing procedure of the control section 10.

When a speaker registration start instruction or a speaker verification start instruction is inputted from, for example, an input section (not shown), the control section 10 begins to carry out the processes shown in FIG. 2. Then, the control section 10 starts the sound source section 5 in step ST1. Then, the sound source section 5 starts to output interference sound information. The interference sound information is superposed on another audio signal at the adder 6. The resulting signal is converted into an analog signal at the D/A converter 7. The analog signal is inputted to the loudspeaker 8. As a result, the interference-sound-added signal is emitted from the loudspeaker 8.

The contents of the interference sound emitted from the loudspeaker 8 may be arbitrary. It is desirable that the loudspeaker 8 should emit the interference sound continuously at such a level as allows the interference sound to be fed back reliably to the microphone 1. For example, music may be used as interference sound. To prevent the interference sound from being recorded, analyzed, and determined, it is desirable that the sound source section 5 should change the interference sound at intervals of specific timing. The specific timing may be each time the sound source section 5 is started by the control section 10 or at regular intervals of time.

Then, in step ST2, the control section 10 starts the speaker verifying section 4. At this time, if the speaker has to be registered, the speaker verifying section 4 is set in the registration mode. If the speaker has to be verified, the speaker verifying section 4 is set in the verification mode.

Thereafter, the speaker utters a word for registration or verification over the microphone 1. At this time, since the interference sound emitted from the loudspeaker 8 is fed back to the microphone 1, the component corresponding to the interference sound is included in the audio signal outputted from the microphone 1. The analog audio signal outputted from the microphone 1 is converted into a digital signal at the A/D converter 2. The digital signal is inputted to the subtracter 3. The subtracter 3 and echo canceller 9 function so as to cancel the component of the interference signal in the audio signal outputted from the A/D converter 2.

When being started and set in the registration mode, the speaker verifying section 4 extracts the feature quantity representing individuality from the audio signal outputted from the subtracter 3 and registers the feature quantity. As a result, the feature quantity of the speaker is registered in the speaker verifying section 4. In the registered feature quantity, the interference sound has been canceled as described above.

When being started and set in the verification mode, the speaker verifying section 4 extracts the feature quantity representing individuality from the audio signal outputted from the subtracter 3 and compares the feature quantity with the already registered feature quantity, thereby collating the present speaker with the registered speaker.

When having started the speaker verifying section 4, the control section 10 waits for the speaker registration or speaker verification to be completed in step ST3. After the speaker registration or speaker verification has been completed, the control section 10 stops the speaker verifying section 4 in step ST4. Then, the control section 10 stops the sound source section 5 in step ST5.

The speaker verifying apparatus may be provided in a mobile phone terminal. In this case, the echo canceller provided in the mobile phone terminal may be used as the echo canceller 9. In the mobile phone terminal, however, the echo canceller may be designed to allow the user to determine whether to enable the echo canceller. If the echo canceller is disabled, the speaker verifying apparatus cannot operate properly. Should this happen, the control section 10 forces the echo canceller 9 to start at the time of speaker registration or speaker verification.

As described above, in the first embodiment, when the speaker utters a word for speaker registration or speaker verification, interference sound is emitted from the loudspeaker 8. Therefore, even though someone near the speaker wiretaps and records the voice given by the speaker, the interference sound is recorded together with the voice of the speaker. In the speaker verifying section 4, the feature quantity extracted from the interference-sound-canceled voice is registered. When the wiretapped and recorded voice is inputted to the microphone 1 at the time of speaker verification, the subtracter 3 cancels only the interference sound newly emitted from the loudspeaker 8 at that time, not the interference sound recorded together with the voice. As a result, the feature quantity extracted from the output signal of the subtracter 3 does not coincide with the feature quantity registered in the speaker verifying section 4.

Since the echo canceller 9 is used to cancel interference sound, the interference sound need not be special sound. The speaker verification can be made only by the comparison of feature quantities and therefore be realized by a simple process.

Use of continuous sound as interference sound makes it more difficult to distinguish between the voice of the speaker and the interference sound. As a result, it is difficult to extract the voice of the speaker from the wiretapped and recorded voice, which prevents such an illegal act.

Furthermore, changing the contents of interference sound at intervals of specific timing makes it difficult to determine the interference sound, even if the audio signals are stored by repeated wiretapping and recording. As a result, it is difficult to extract the voice of the speaker from the wiretapped and recorded voice, which prevents such an illegal act.

### (Second Embodiment)

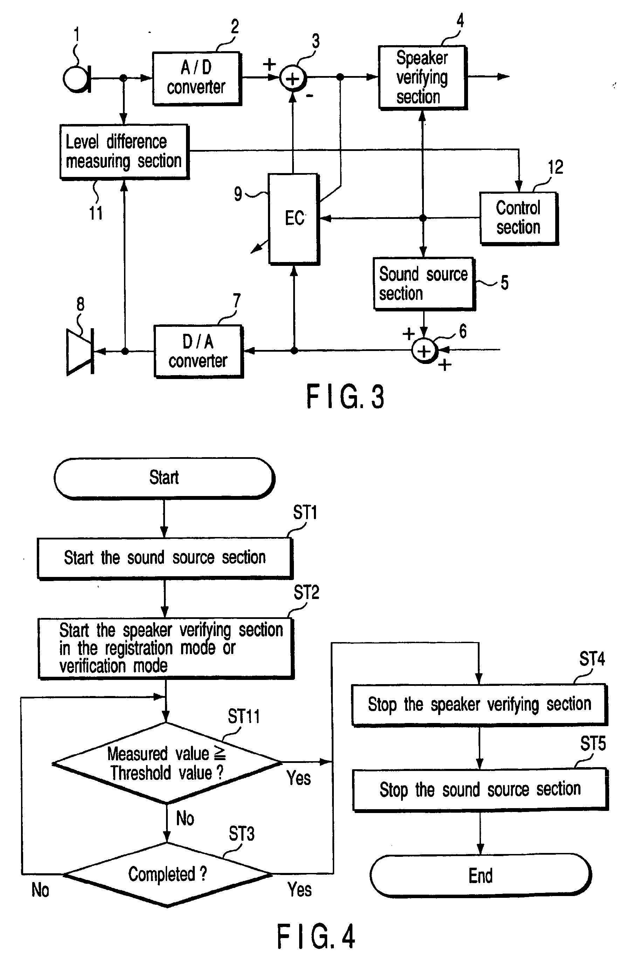

FIG. 3 is a block diagram showing the configuration of a speaker verifying apparatus according to a second embodiment of the present invention. In FIG. 3, the same parts as those in FIG. 1 are indicated by the same reference numerals and a detailed explanation of them will be omitted.

As shown in FIG. 3, the speaker verifying apparatus according to the second embodiment comprises a microphone 1, an A/D converter 2, a subtracter 3, a speaker verifying section 4, a sound source section 5, an adder 6, a D/A converter 7, a loudspeaker 8, an echo canceller (EC) 9, a level difference measuring section 11, and a control section 12. That is, the speaker verifying section of the second embodiment differs from the speaker verifying section of the first embodiment in that the control section 12 is used in place of the control section 10 and that the level difference measuring section 11 is added.

The level difference measuring section 11 measures the difference between the audio signal outputted from the microphone 1 and the audio signal inputted to the loudspeaker 8. The level difference measuring section 11 informs the control section 12 of the measured value. The level difference measured by the level difference measuring section 11 may be the level difference between the output signal of the A/D converter 2 and the output signal of the adder 6.

The control section 12, which includes, for example, a computer, controls the operations of the speaker verifying section 4, sound source section 5, and echo canceller 9, taking into account the measured value notified by the level difference measuring section 11.

The operator of the speaker verifying apparatus configured as described above will be explained.

FIG. 4 is a flowchart for the processing procedure of the control section 12 in FIG. 3. The steps in which the same processing is done as in FIG. 2 are indicated by the same reference numerals and a detailed explanation of them will be omitted.

In the second embodiment, the level difference between the audio signal outputted from the microphone 1 and the audio signal inputted to the loudspeaker 8 is always measured by the level difference measuring section 11. While waiting for the completion of speaker registration or speaker verification, the control section 12 determines in step ST11 whether the measured value has exceeded a specific threshold value. If the measured value has exceeded the specific threshold value, the control section 12 passes control to step ST4, even if the speaker registration or speaker verification has not been completed. The remaining operations in the speaker verifying section of the second embodiment are the same as those in the speaker verifying section of the first embodiment.

As described above, the second embodiment produces the same effect as that of the first embodiment. In addition, with the second embodiment, when the level difference between the audio signal outputted from the microphone 1 and the audio signal inputted to the loudspeaker 8 becomes extraordinarily large, the speaker registration or speaker verification is forced to stop. That is, when the audio signal cannot be inputted to the loudspeaker 8 due to some fault and interference sound cannot be emitted, the speaker registration or speaker verification will not be made. This prevents the voice of the speaker from being wiretapped and recorded in the above situation.

### (Third Embodiment)

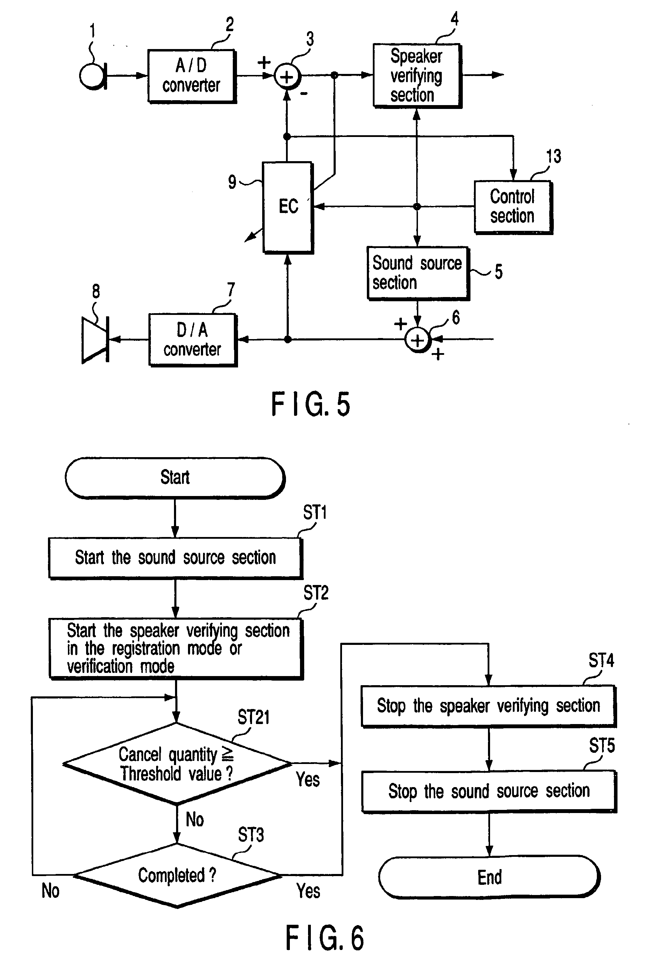

FIG. 5 is a block diagram showing the configuration of a speaker verifying apparatus according to a third embodiment of the present invention. In FIG. 5, the same parts as those in FIG. 1 are indicated by the same reference numerals and a detailed explanation of them will be omitted.

As shown in FIG. 5, the speaker verifying apparatus according to the third embodiment comprises a microphone 1, an A/D converter 2, a subtracter 3, a speaker verifying section 4, a sound source section 5, an adder 6, a D/A converter 7, a loudspeaker 8, an echo canceller (EC) 9, and a control section 13. That is, the speaker verifying section of the third embodiment differs from the speaker verifying section of the first embodiment in that the control section 13 is used in place of the control section 10.

The control section 13, which includes, for example, a computer, controls the operations of the speaker verifying section 4, sound source section 5, and echo canceller 9, taking into account the suppressing signal outputted from the echo canceller 9.

The operation of the speaker verifying apparatus configured as described above will be explained.

FIG. 6 is a flowchart for the processing procedure of the control section 13 in FIG. 5. The steps in which the same processing is done as in FIG. 2 are indicated by the same reference numerals and a detailed explanation of them will be omitted.

In the third embodiment, while waiting for the completion of speaker registration or speaker verification, the control section 13 determines in step ST21 whether the cancel quantity in subtraction at the subtracter 3 is equal to or smaller than a specific threshold value. The control section 13 determines the cancel quantity on the basis of the suppressing signal outputted from the echo canceller 9. If the cancel quantity becomes equal to or smaller than the specific threshold value, the control section 13 passes control to step ST4, even if the speaker registration or speaker verification has not been completed. The remaining operations in the speaker verifying section of the third embodiment are the same as those in the speaker verifying section of the first embodiment.

The cancel quantity may be the level difference between the output signal of the adder 6 and the output signal of the subtracter 3.

As described above, the third embodiment produces the same effect as that of the first embodiment. In addition, with the third embodiment, when the cancel quantity becomes extraordinarily small, the speaker registration or speaker verification is forced to stop. That is, when the interference sound emitted from the loudspeaker 8 is not fed back to the microphone 1 sufficiently because of some fault, the speaker registration or speaker verification will not be made. This prevents the voice of the speaker from being wiretapped and recorded in the above situation.

### (Fourth Embodiment)

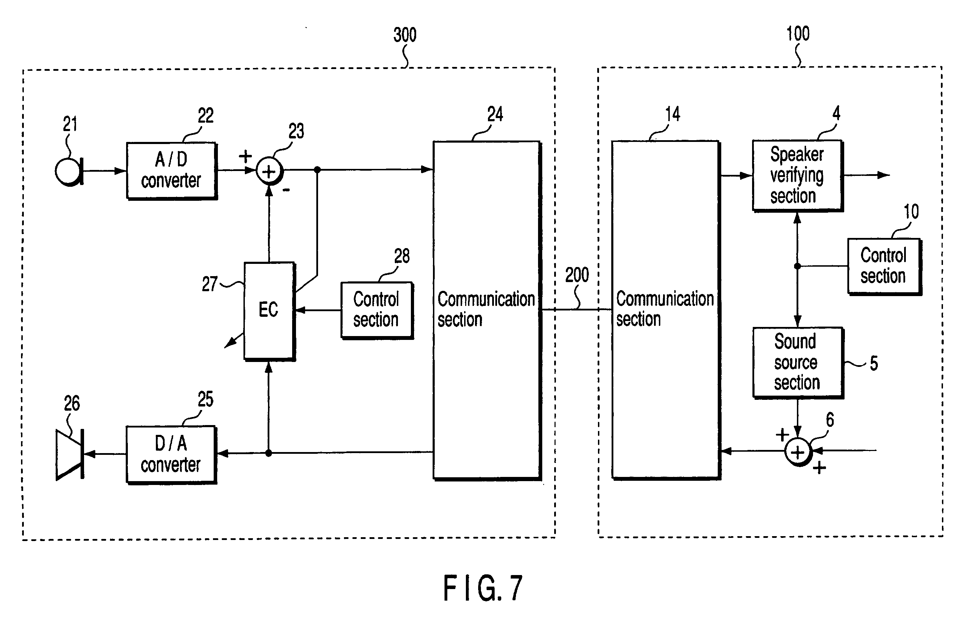

FIG. 7 is a block diagram showing the configuration of a speaker verifying apparatus according to a fourth embodiment of the present invention. In FIG. 7, the same parts as those in FIG. 1 are indicated by the same reference numerals and a detailed explanation of them will be omitted.

In FIG. 7, numeral 100 indicates the speaker verifying apparatus of the fourth embodiment. The speaker verifying apparatus 100 verifies the speaker of a voice communication terminal 300 connected via a communication channel. The communication channel 200 may be an exclusive channel or a channel provided in a public network.

As shown in FIG. 7, the speaker verifying apparatus 100 comprises a speaker verifying section 4, a sound source section 5, an adder 6, a control section 10, and a communication section 14.

The communication section 14 communicates with the voice communication terminal 300 via the communication channel 200.

The voice communication terminal 300 includes a microphone 21, an A/D converter 22, a subtracter 23, a communication section 24, a D/A converter 25, a loudspeaker 26, an echo canceller (EC) 27, and a control section 28.

The microphone 21, A/D converter 22, subtracter 23, D/A converter 25, loudspeaker 26, and echo canceller (EC) 27 operate in the same manner as the microphone 1, A/D converter 2, subtracter 3, D/A converter 7, loudspeaker 8, and echo canceller 9 do in the first embodiment, respectively.

The communication section 24 communicates with the speaker verifying apparatus 100 via the communication channel 200.

The communication sections 14, 24 may be provided with an encoding and decoding section for encoding and decoding audio signals.

The control section 28 controls the operation of the echo canceller 27.

As described above, in the speaker verifying apparatus 100, the adder 6 adds interference sound to the audio signal and then the communication section 14 transmits the resulting audio signal to the communication channel 200 so that the audio signal may be emitted from the loudspeaker 26 of the voice communication terminal 300 as a received voice. Furthermore, the communication section 14 receives the audio signal transmitted from the voice communication terminal 300 to the communication channel 200, with the feedback from the loudspeaker 26 to the microphone 21 being canceled. Using the audio signal received by the communication section 14, the speaker verifying section 4 registers or verifies the speaker. Of the operations carried out by the speaker verifying apparatus of the first embodiment, the emission of interference sound, the input of the speaker's voice and the interference sound, and the cancellation of interference sound are carried out by the voice communication terminal 300.

Therefore, the fourth embodiment produces the same effect as that of the first embodiment. In addition, the fourth embodiment makes it possible to verify the speaker at a distant place. Thus, when a bank or the like provides a home banking service, the service center can verify users.

The present invention is not limited to the above embodiments. For instance, when the speaker registration or speaker verification is forced to stop in the second and third embodiment, it is desirable that the speaker or the operator of the apparatus should be informed of the fact by displaying a message on the indicator or giving a vocal message. By doing this, the speaker or the operator of the apparatus recognizes the abnormality immediately. As a result, the speaker can stop uttering a word at once. Moreover, the operator of the apparatus can take necessary steps, such as repairing the speaker verifying apparatus.

In the second and third embodiments, when the speaker registration or speaker verification is forced to stop, control may be switched automatically to such individual authentication means as a fingerprint matching apparatus or authentication by the operator.

In the second and third embodiments, the condition for forcing the speaker registration or speaker verification to stop may be changed arbitrarily. For instance, the operator may give a stop instruction.

In the fourth embodiment, the output state of interference sound may be monitored as in the second and third embodiments and, if an abnormal condition occurs, the speaker registration or speaker verification may be forced to stop.

## Claims

1. A speaker verifying apparatus **characterised by** comprising:
a microphone (1);
a loudspeaker (8) arranged in such a manner that sound emitted from the loudspeaker (8) is fed back to the microphone (1);
a canceling part (3, 9) configured to cancel the component corresponding to the sound emitted from the loudspeaker (8) and fed back to the microphone (1), in the output signal of the microphone (1); **characterised by**
a registering part (4) configured to register a speaker's voice feature quantity extracted from an output signal of the canceling part (3, 9) in a registration mode;
a collating part (4) configured to collate a speaker's voice feature quantity extracted from an output signal of the cancelling part (3, 9) with the signal registered in the registering part (4) in a verification mode; and
a supplying part (5) configured to supply a interference sound signal to the loudspeaker (8) in the registration mode or the verification mode, and to change a signal output as the interference sound signal at intervals of a specific timing.

2. The speaker verifying apparatus according to claim 1, **characterised in that** the supplying part (5) supplies a signal for causing the loudspeaker (8) to output continuous sound, to the loudspeaker (8) as the interference sound signal.

3. The speaker verifying apparatus according to claim 1, **characterised by** further comprising a stopping part (12, 13) configured to stop the operation of the registering part (4) and that of the collating part (4), when a state where the loudspeaker (8) emits sound fulfils a specific stop condition.

4. The speaker verifying apparatus according to claim 3, **characterised in that** the stopping part (12) stops the operation of the registering part (4) and that of the collating part (4), when the level difference between the signal inputted to the loudspeaker (8) and the signal outputted from the microphone (1) is equal to or larger than a specific value.

5. The speaker verifying apparatus according to claim 3, **characterised in that** the stopping part (13) stops the operation of the registering part (4) and that of the collating part (4), when the cancel quantity produced by the cancelling part (3, 9) is equal to or smaller than a specific quantity.

## Patentansprüche

1. Gerät zur Sprecherüberprüfung, **gekennzeichnet durch**:
ein Mikrophon (1);
einen Lautsprecher (8), der so angeordnet ist, dass ein von dem Lautsprecher (8) emittierter Ton zu dem Mikrophon (1) zurückgeführt wird;
einem Löschteil (3, 9), das konfiguriert ist, um die Komponente, die dem von dem Lautsprecher (8) emittierten und zu dem Mikrophon (1) zurückgeführten Ton entspricht, in dem Ausgangssignal des Mikrophons (1) zu löschen; **gekennzeichnet durch**:
einem Registrierteil (4), das konfiguriert ist, um eine Sprecher-Stimmen-Merkmalsgröße, die von einem Ausgangssignal des Löschteils (3, 9) extrahiert wurde, in einem Registriermodus zu registrieren;
einem Vergleichsteil (4), das konfiguriert ist, um eine Sprecher-Stimmen-Merkmalsgröße, die von einem Ausgangssignal des Löschteils (3, 9) extrahiert wurde, mit dem in dem Registrierteil (4) registrierten Signal in einem Überprüfungsmodus zu vergleichen; und
einem Zuführteil (5), das konfiguriert ist, um ein Störtonsignal zu dem Lautsprecher (8) in eine Registriermodus oder Überprüfungsmodus zu liefern und eine Signalausgabe als das Störtonsignal bei Zeitabständen mit einem spezifischen Timing zu ändern.

2. Gerät zur Sprecherüberprüfung gemäß Anspruch 1, **dadurch gekennzeichnet, dass** das Zuführteil (5) ein Signal liefert, um den Lautsprecher (8) zu veranlassen, einen kontinuierlichen Ton an den Lautsprecher (8) als das Störtonsignal auszugeben.

3. Gerät zur Sprecherüberprüfung gemäß Anspruch 1, ferner **gekennzeichnet durch** einem Stoppteil (12, 13), das konfiguriert ist, um den Betrieb des Registrierteils (4) und den des Vergleichsteils (4) zu stoppen, wenn ein Zustand, in dem der Lautsprecher (8) einen Ton emittiert, eine spezifische Stoppbedingung erfüllt.

4. Gerät zur Sprecherüberprüfung gemäß Anspruch 3, **dadurch gekennzeichnet, dass** der Stoppteil (12) den Betrieb des Registrierteils (4) und den des Vergleichsteils (4) stoppt, wenn die Pegeldifferenz zwischen dem in den Lautsprecher (8) eingegebenen Signal und dem von dem Mikrophon (1) ausgegebenen Signal gleich oder größer als ein spezifischer Wert ist.

5. Gerät zur Sprecherüberprüfung gemäß Anspruch 3, **dadurch gekennzeichnet, dass** das Stoppteil (13) den Betrieb des Registrierteils (4) und den des Vergleichsteils (4) stoppt, wenn die durch das Löschteil (3, 9) erzeugte Löschgröße gleich oder kleiner als eine spezifische Größe ist.

## Revendications

1. Système de vérification du locuteur, **caractérisé en ce qu'**il comprend :
un microphone (1) ;
un haut-parleur (8) agencé de façon à ce qu'un son émis à partir du haut-parleur (8) soit réintroduit dans le microphone (1) ;
une partie d'annulation (3, 9) configurée pour annuler la composante correspondant au son émis à partir du haut-parleur (8) et réintroduit dans le microphone (1), dans le signal de sortie du microphone (1) ; **caractérisé par**
une partie d'enregistrement (4) configurée pour enregistrer une quantité caractéristique de la voix du locuteur extraite d'un signal de sortie de la partie d'annulation (3, 9) dans un mode d'enregistrement ;
une partie de fusionnement (4) pour faire fusionner une quantité caractéristique de la voix du locuteur extraite à partir d'un signal de sortie de la partie d'annulation (3, 9) avec le signal enregistré dans la partie d'enregistrement (4) dans un mode de vérification ; et
une partie de fourniture (5) configurée pour fournir un signal sonore d'interférence au haut-parleur (8) dans le mode d'enregistrement ou le mode de vérification, et pour modifier une sortie de signal en tant que signal sonore d'interférence à des intervalles d'une synchronisation spécifique.

2. Système de vérification du locuteur selon la revendication 1, **caractérisé en ce que** la partie de fourniture (5) fournit un signal pour amener le haut-parleur (8) à délivrer un son continu, au haut-parleur (8) en tant que signal sonore d'interférence.

3. Système de vérification du locuteur selon la revendication 1, **caractérisé en ce qu'**il comprend en outre une partie d'arrêt (12, 13) configurée pour arrêter le fonctionnement de la partie d'enregistrement (4) et celui de la partie de fusionnement (4) lorsqu'un état où le haut-parleur (8) émet un son remplit une condition d'arrêt spécifique.

4. Système de vérification du locuteur selon la revendication 3, **caractérisé en ce que** la partie d'arrêt (12) arrête le fonctionnement de la partie d'enregistrement (4) et celui de la partie de fusionnement (4) lorsque la différence de niveau entre le signal entré dans le haut-parleur (8) et le signal émis à partir du microphone (1) est égale ou supérieure à une valeur spécifique.

5. Système de vérification du locuteur selon la revendication 3, **caractérisé en ce que** la partie d'arrêt (13) arrête le fonctionnement de la partie d'enregistrement (4) et celui de la partie de fusionnement (4) lorsque la quantité d'annulation produite par la partie d'annulation (3, 9) est égale ou inférieure à une quantité spécifique.
